# FASCICULE DE BREVET EUROPEEN

(11) **EP 1 633 578 B1**
(45) Date de publication et mention de la délivrance du brevet: **22.05.2013**
(21) Numéro de dépôt: 04739356.6
(22) Date de dépôt: 26.05.2004
(51) Int. Cl.: B60C 3/04, B60C 11/00, B60C 1/00

(54) **PNEUMATIQUE POUR ENGIN LOURD MONTÉ SUR UNE JANTE**
AUF EINER FELGE MONTIERTER REIFEN FÜR SCHWERFAHRZEUG
TYRE FOR HEAVY VEHICLE MOUNTED ON A RIM

(30) Priorité: 28.05.2003 FR 0306542
(43) Date de publication de la demande: 15.03.2006
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: VU, Hien, F-63400 Chamalieres (FR); GODEAU, Gilles, F-63000 Clermont-Ferrand (FR)
(74) Mandataire: Le Cam, Stéphane Georges Elie
(86) Numéro de dépôt international: PCT/EP2004/005646
(87) Numéro de publication internationale: WO 2004/106089

(56) Documents cités:
- EP-A- 0 872 361
- GB-A- 1 587 963
- US-A- 4 480 672

## Description

La présente invention concerne un pneumatique monté sur une jante, destiné à équiper un engin lourd de type agricole ou génie civil, plus particulièrement un tracteur agricole, ledit pneumatique comprenant au moins une armature de carcasse surmontée radialement d'une bande de roulement.

L'armature de renforcement ou renforcement des pneumatiques et notamment des pneumatiques d'engin agricole est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

Concernant la conception habituelle des pneumatiques d'engin agricole l'armature de carcasse, ancrée dans chaque bourrelet, est composée d'au moins une couche d'éléments de renforcement textiles et/ou métalliques, les dits éléments étant sensiblement parallèles entre eux dans la couche et pouvant être sensiblement radiaux et/ou franchement croisés d'une nappe à la suivante en faisant avec la direction circonférentielle des angles égaux ou inégaux. L'armature de carcasse est habituellement surmontée d'une armature de sommet composée d'au moins deux couches de sommet de travail d'éléments de renforcement qui peuvent être textiles ou métalliques, mais croisés d'une couche à la suivante en faisant avec la direction circonférentielle des angles faibles. La bande de roulement du pneumatique considéré est formée de blocs de caoutchouc ou barrettes, inclinées par rapport à la direction circonférentielle d'un angle généralement élevé, et séparées circonférentiellement les unes des autres par des creux présentant une largeur (mesurée dans le sens circonférentiel) supérieure à la largeur moyenne des barrettes. Les dites barrettes peuvent être symétriques entre elles par rapport au plan équatorial en étant continues. axialement ou, comme dans la majorité des cas, discontinues axialement. Les extrémités de barrettes axialement proches du plan équatorial sont alors dans la plupart des cas décalées circonférentiellement les unes par rapport aux autres, tout en présentant ce qu'il est courant de dénommer un dessin en chevrons.

Les pneumatiques pour engins agricoles, tels que décrits ci-dessus, sont habituellement soumis à une pression comprise entre 1,1 et 1,4 bars pour l'utilisation des engins sur les sols agraires pour des charges et dimensions usuelles, correspondant à un taux de déflexion maximal du pneumatique inférieur à 28 %.

Le taux de déflexion maximal est défini comme étant la flèche maximale divisée par la hauteur du flanc H, définie ultérieurement.

La flèche d'un pneumatique est définie par la déformation radiale du pneumatique, ou variation de hauteur radiale, lorsque celui-ci passe d'un état non chargé à un état chargé en statique, dans des conditions de charge et de pressions nominales.

Lorsque ces mêmes engins àgricoles doivent effectuer des trajets sur sols durs ou sur routes, à des vitesses plus élevées, il est nécessaire d'avoir des pressions plus élevées, pouvant atteindre 2 bars, pour conserver une endurance satisfaisante de ces pneumatiques et prévenir une usure trop rapide.

Pour effectuer ces changements de pression, il est nécessaire d'avoir un dispositif tel qu'un compresseur ou une réserve d'air sous pression, généralement embarqué sur l'engin, celui-ci étant par définition en circulation lorsque le besoin d'augmenter la pression des pneumatiques apparaît.

L'inconvénient majeur de ces dispositifs, outre leur présence, leur coût et leur entretien, est le temps nécessaire pour effectuer le changement de pression des pneumatiques.

Par ailleurs, une demande actuelle des utilisateurs est de diminuer encore les risques d'endommagements des cultures lors de l'utilisation sur des sols agraires du fait de l'écrasement desdites cultures lors du passage des véhicules et plus spécifiquement des pneumatiques.

Les nombreuses recherches effectuées par la demanderesse portant sur des modifications de profils méridiens de bande de roulement, de profils méridiens d'armature de carcasse, de matériaux d'armatures de carcasse et sommet, des modifications de dessin et dimensions de blocs de sculpture, n'ont pas apporté, à ce jour, les améliorations escomptées.

Il est par ailleurs connu d'utiliser des pneumatiques jumelés, ce qui peut permettre de limiter l'écrasement en réduisant la pression de chacun des pneumatiques tout en conservant la capacité de charge. Mais de telles solutions conduisent à des problèmes d'encombrement notamment sur route.

Le document GB-A-1587 963 décrit un pneumatique pour engin lourds, de type agricole, monté sur une jante, coforme au préambule de la revendication 1.

Un but de l'invention est ainsi de fournir des pneumatiques pour engin agricole qui permettent de diminuer les endommagements des cultures, notamment dus au compactage ou à l'écrasement du fait du passage de l'engin agricole, sans les inconvénients précités. Ce but est atteint avec le pneumatique pour engin lourd de type agricole, monté sur une jante, selon la revendication 1.

Le rapport de forme H/S est le rapport de la hauteur H du pneumatique sur jante sur la largeur axiale maximale S du pneumatique, lorsque ce dernier est monté sur sa jante de service et gonflé à sa pression recommandée. La hauteur H, est définie comme la différence entre le rayon maximal de la bande de roulement et le rayon minimal du bourrelet.

La largeur de la bande de roulement A est mesurée sur un profil méridien selon la direction axiale entre les extrémités d'épaulement, lorsque le pneumatique est monté sur sa jante de service et gonflé à sa pression recommandée ; elle correspond à la largeur en roulage, selon la direction axiale, de la surface au contact d'un sol plan.

La hauteur de flèche méridienne B du sommet est mesurée sur un profil méridien selon la direction radiale, lorsque le pneumatique est monté sur sa jante de service et gonflé à sa pression recommandée. La hauteur de flèche méridienne B est définie comme la différence entre le rayon maximal de la bande de roulement et le rayon minimal de la bande de roulement ; le rayon maximal de la bande de roulement est mesuré dans le plan équatorial et le rayon minimal de la bande de roulement est mesuré à une extrémité d'épaulement.

Une extrémité d'épaulement est définie, dans la zone de l'épaule du pneumatique, lorsque ce dernier est monté sur sa jante de service et gonflé à sa pression recommandée, par la projection orthogonale sur la surface extérieure du pneumatique de l'intersection des tangentes aux surfaces d'une extrémité axialement extérieure de la bande de roulement (sommet des barrettes) d'une part et de l'extrémité radialement extérieure d'un flanc d'autre part.

On entend par « axiale » une direction parallèle à l'axe de rotation du pneumatique ; cette direction peut être « axialement intérieure » lorsqu'elle est dirigée vers l'intérieur du pneumatique et « axialement extérieure » lorsqu'elle est dirigée vers l'extérieur du pneumatique.

On entend par « radiale » une direction perpendiculaire à l'axe de rotation du pneumatique et passant par cet axe de rotation. Cette direction peut être « radialement intérieure » ou « radialement extérieure » selon qu'elle se dirige vers l'axe de rotation ou vers l'extérieur du pneumatique.

L'axe de rotation du pneumatique est l'axe autour duquel il tourne en utilisation normale.

La direction circonférentielle du pneumatique, ou direction longitudinale, est la direction correspondant à la périphérie du pneumatique et définie par la direction de roulement du pneumatique. En tout point, elle est perpendiculaire aux directions radiales et axiales.

Un plan radial ou méridien est un plan qui contient l'axe de rotation du pneumatique.

Un plan circonférentiel est un plan perpendiculaire à l'axe de rotation du pneumatique.

Le plan médian circonférentiel ou plan équatorial est un plan perpendiculaire à l'axe de rotation du pneumatique et qui divise le pneumatique en deux moitiés.

Les résultats des essais effectués ont montré que l'utilisation d'un pneumatique ainsi défini permet de diminuer les risques d'endommagement des cultures lors du roulage dans les champs, notamment par une meilleure répartition de la pression au niveau de la surface de contact avec le sol.

Le pneumatique ainsi défini selon l'invention, peut être utilisé à une pression de 1 bar ou moins pour des charges et dimensions usuelles sans diminution des autres propriétés et notamment de l'usure en comparaison des pneumatiques usuels.

De la même façon, le pneumatique ainsi défini peut autoriser une augmentation de la charge pour des pressions et dimensions usuelles.

Le pneumatique ainsi réalisé selon l'invention est alors utilisé dans des conditions telles que son taux de déflexion est supérieur à 28 %.

Il apparaît en effet que la combinaison d'un rapport de forme plus petit que ceux des pneumatiques usuels avec un rapport A/B de la largeur de la bande de roulement sur la hauteur de flèche du sommet supérieur à 17 et inférieure à 37, qui traduit un sommet du pneumatique et plus exactement un profil méridien de la bande de roulement présentant un rayon de courbure plus grand que ceux des pneumatiques usuels, conduit à de telles performances.

Selon une réalisation préférée de l'invention, le rapport A/S de la largeur de la bande de roulement A sur la largeur axiale maximale du pneumatique S est supérieur à 0,9.

Selon cette réalisation préférée de l'invention, les résultats des essais montrent des performances en terme d'écrasement et de compactage encore plus intéressantes ; il apparaît que cette réalisation qui définit un rapport A/S supérieur à 0,9, qui traduit une largeur de bande de roulement plus importante que celle d'un pneumatique usuel pour une largeur axiale maximale du pneumatique donnée, conduit encore à une amélioration des performances lors d'utilisation à des pressions inférieures aux pressions d'utilisation usuelles pour des charges et dimensions usuelles.

Selon une réalisation avantageuse de l'invention, le produit des rapports A/B, de la largeur de la bande de roulement sur la hauteur de flèche du sommet, et A/S, de la largeur de la bande de roulement A sur la largeur axiale maximale du pneumatique S, est supérieur 14, et de préférence supérieur à 16.

Selon un mode de réalisation préféré de l'invention, l'armature de carcasse radiale du pneumatique comprenant au moins une couche d'éléments de renforcement orientés radialement, la distance U entre là couche, radialement la plus à l'intérieur, d'éléments de renforcement orientés radialement et le centre de la corde, de longueur D égale à 20 % de la largeur du pneumatique axiale maximale S, formant un angle de 45° avec la direction perpendiculaire à l'axe de rotation et placée entre deux points de la paroi interne du pneumatique, est comprise entre 0,21xD et 0,33xD ; selon cette réalisation de l'invention, la distance U est mesurée selon la direction perpendiculaire à l'orientation de ladite corde.

La mesure de la distance U est effectuée sur une coupe méridienne d'un pneumatique dans une zone d'épaule ne comportant pas de barrettes ; en d'autres termes la mesure est effectuée dans une zone d'épaule entre deux barrettes.

Par ailleurs, cette mesure de la distance U est effectuée avec une distance axiale entre les extrémités axialement extérieures des bourrelets telle que le rapport entre la largeur du pneumatique axiale maximale S et cette distance est inférieur à 1,2.

Une telle réalisation de l'invention, qui correspond à une définition du rayon de courbure à l'épaule, conduit notamment à une amélioration des performances d'endurance du pneumatique.

L'invention prévoit lorsque le pneumatique est monté sur sa jante de service que le rapport S/L de la largeur du pneumatique axiale maximale S sur la largeur de jante L est inférieur à 1,2.

La largeur de jante L est définie comme la distance mesurée selon la direction axiale entre les sièges de jante et donc entre les extrémités axialement extérieures des bourrelets lorsque le pneumatique est monté sur sa jante.

Il est apparu que les pneumatiques réalisés selon cette variante de l'invention peuvent être utilisés sur des sols durs tels que des routes sans nécessité de modifications de la pression, choisie comme indiquée précédemment avantageusement égale à 1 bar ou moins. En effet, l'utilisation de jantes larges permet notamment d'améliorer le comportement sur route. Une telle réalisation est très avantageuse puisqu'elle va permettre à l'utilisateur d'effectuer des travaux agraires entre des trajets sur route sans intervention sur la pression des pneumatiques. En outre, comme expliqué précédemment, cela va permettre de concevoir des engins sans équipement complémentaire pour effectuer des augmentations de pression. Il s'avère ainsi que les engins équipés de pneumatiques tels que décrits selon l'invention autorisent des rendements supérieurs puisque toutes les étapes de changement de pression ne sont plus nécessaires.

En outre, les pneumatiques ainsi définis selon l'invention autorisent un tel roulage sur route avec une usure acceptable, notamment en raison de leur caractéristique A/B supérieure à 17.

Une réalisation préférée de l'invention prévoit encore que la bande de roulement est constituée d'un caoutchouc à faible perte hystérétique tel que les pertes hystérétiques PH sont inférieures à 34%.

Les pertes hystérétiques PH sont mesurées en pourcentage par rebond à 60 °C au sixième choc, selon la relation PH(%) = 100 x (Wₒ-W₁)/W₁, avec Wₒ: énergie fournie et W₁ : énergie restituée.

Selon cette réalisation préférée de l'invention l'engin agricole pourra être utilisé sur route à plus grande vitesse sans risque de dégradation prématurée des pneumatiques. Des vitesses supérieures à 50 km/h peuvent être atteintes avec des pressions inférieures à 1 bar pour des charges et dimensions usuelles.

La bande de roulement est ainsi avantageusement réalisée avec des mélanges caoutchouteux dont la composition de caoutchouc réticulée présentant des pertes hystérétiques réduites est à base d'au moins un élastomère diénique dont le taux molaire d'unités issues de diène(s) conjugué(s) est supérieur à 50 %.

Par élastomère diénique, on entend de manière connue un élastomère (homopolymère ou copolymère) qui est issu au moins en partie de monomères diènes (monomères porteurs de deux doubles liaisons carbone-carbone, conjuguées ou non).

Ledit ou chaque élastomère diénique utilisable dans la composition de bande de roulement selon l'invention est dit "fortement insaturé", i.e. ayant un taux d'unités d'origine issues de diène(s) conjugué(s) qui est supérieur à 50 %.

C'est ainsi, par exemple, que des élastomères diéniques tels que les caoutchoucs butyle ou les copolymères de diènes et d'alpha-oléfines de type EPDM n'entrent pas dans la définition précédente, car ils peuvent être qualifiés d'élastomères diéniques "essentiellement saturés" (taux de motifs d'origine diénique faible ou très faible, toujours inférieur à 15 %).

A titre d'élastomère diénique susceptible d'être mis en oeuvre dans les compositions conformes à l'invention, on peut utiliser, outre le caoutchouc naturel :
- un homopolymère obtenu par polymérisation d'un monomère diène conjugué ayant de 4 à 12 atomes de carbone, ou
- un copolymère obtenu par copolymérisation d'un ou plusieurs diènes conjugués entre eux ou avec un ou plusieurs composés vinyle aromatique ayant de 8 à 20 atomes de carbone.

A titre de diènes conjugués conviennent notamment le butadiène-1,3, le 2-méthyl-1,3-butadiène, les 2,3-di(alkyle en C1 à C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatiques conviennent par exemple le styrène, l'ortho-, le méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1 % et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution. Ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes de synthèse, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse (Tg) de -40°C à -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

De manière particulièrement préférentielle, l'élastomère diénique de la composition conforme à l'invention est choisi dans le groupe des élastomères diéniques fortement insaturés constitué par les polybutadiènes (BR), les polyisoprènes de synthèse (IR), les copolymères de butadiène-styrène (SBR), les copolymères de butadiène-isoprène (BIR), les copolymères d'isoprène-styrène (SIR), les copolymères de butadiène-styrène-isoprène (SBIR) ou un mélange de deux ou plus de ces composés.

Selon un mode de réalisation préféré de l'invention, ledit élastomère diénique appartient au groupe constitué par le caoutchouc naturel, les polyisoprènes de synthèse, les polybutadiènes et les copolymères de butadiène et d'un vinylaromatique préparés en solution ou en émulsion.

De préférence encore, la bande de roulement est réalisée avec des mélanges caoutchouteux dont la composition de caoutchouc réticulée est à base d'au moins 20 pce (pce : parties en poids pour cent parties d'élastomère(s)) et de préférence au moins 40 pce de caoutchouc naturel.

Selon l'invention, la composition peut encore avantageusement comprendre un coupage de caoutchouc naturel et d'au moins un copolymère de butadiène et d'un vinylaromatique préparé en solution.

Avantageusement, la composition de caoutchouc réticulée constituant la bande de roulement du pneumatique comprend du noir de carbone à titre de charge renforçante majoritaire ou exclusive.

Comme noirs de carbone conviennent tous les noirs de carbone conventionnellement utilisés dans les pneumatiques et particulièrement dans les bandes de roulement de pneumatique, notamment les noirs du type HAF, ISAF, SAF. A titre d'exemples non limitatifs de tels noirs, on peut citer les noirs N115, N134, N234, N339, N347, N375.

On notera que la composition de bande de roulement selon l'invention peut également comprendre, à titre de charge renforçante, un coupage de noir de carbone et d'une charge inorganique renforçante, telle que de la silice. On entend de manière connue par "charge inorganique renforçante" une charge inorganique ou minérale, quelle que soit sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, i.e. capable de remplacer, dans sa fonction de renforcement, une charge conventionnelle de noir de carbone.

Pour améliorer encore les performances d'endurance du pneumatique, l'invention propose avantageusement de limiter les risques de cisaillement et/ou de poinçonnement des nappes carcasse lorsque l'armature de carcasse est constituée d'au moins deux nappes carcasses. Selon un tel mode de réalisation de l'invention, la distance entre les renforts desdites nappes carcasse et plus spécifiquement la distance entre les renforts desdites nappes carcasse dans la zone épaule est supérieure à 1,5 mm et de préférence supérieure à 2 mm.

La distance entre les renforts est mesurée de câble à câble, c'est-à-dire entre le câble d'une première nappe et le câble d'une seconde nappe de carcasse. En d'autres termes, cette distance englobe les épaisseurs respectives des mélanges caoutchouteux de calandrage de chacune des nappes compris entre lesdits câbles et d'éventuelles couches de mélange caoutchouteux incorporées pour satisfaire cette condition.

La zone épaule est définie comme étant la zone de jonction entre la bande de roulement et les flancs.

Selon une réalisation avantageuse de l'invention, la sculpture de la bande de roulement est composée principalement, de part et d'autre du plan équatorial, de barrettes inclinées par rapport à la direction circonférentielle pour former un dessin en V, ou chevron, et lesdites barrettes ont des axes moyens inclinés par rapport à la direction circonférentielle de manière que les extrémités des barrettes proches du plan équatorial pénètrent, dans l'aire de contact entre pneumatique et sol et lors du roulage du pneumatique, avant les extrémités proches des bords axialement extérieurs de la bande de roulement. Ces extrémités proches du plan équatorial présentent une surface destinée à venir au contact du sol dont le rapport de la dimension longitudinale sur la dimension axiale est supérieur à 1. Le rapport de ces deux dimensions sur des pneumatiques usuels pour engin agricole est égal à 1.

Les inventeurs ont su mettre en évidence que cette caractéristique du pneumatique selon l'invention autorise une usure moins rapide, notamment lors d'usages dudit pneumatique sur route à des vitesses importantes.

D'autres détails et caractéristiques avantageux de l'invention ressortiront ci-après de la description d'exemples de réalisations de l'invention en référence aux figures 1 à 4 qui représentent,
figure la, un schéma d'un pneumatique conforme à l'invention,
figure 1b, une vue partielle agrandie d'une partie du schéma de la figure 1,
figure 2, un schéma agrandi de la zone d'épaule d'un pneumatique conforme à l'invention illustrant la mesure de la distance U,
figure 3, un autre schéma agrandi de la zone d'épaule d'un pneumatique conforme à l'invention,
figure 4a, un schéma représentant les extrémités proche du plan équatorial de plusieurs barrettes sur la bande de roulement d'un pneumatique selon une variante de réalisation de l'invention,
figure 4b, un schéma agrandi de l'extrémité proche du plan équatorial d'une barrette d'un pneumatique selon la variante de réalisation de l'invention sur la figure 2a.

Les figures ne sont pas représentées à l'échelle pour en simplifier la compréhension.

La figure la illustre un schéma d'un pneumatique 1, de dimension 650/60 R38, représenté monté et gonflé sur sa jante de montage.

Le pneumatique 1 comprend une armature de carcasse 2 surmontée d'une armature de sommet 3 elle-même surmontée d'une bande de roulement 4.

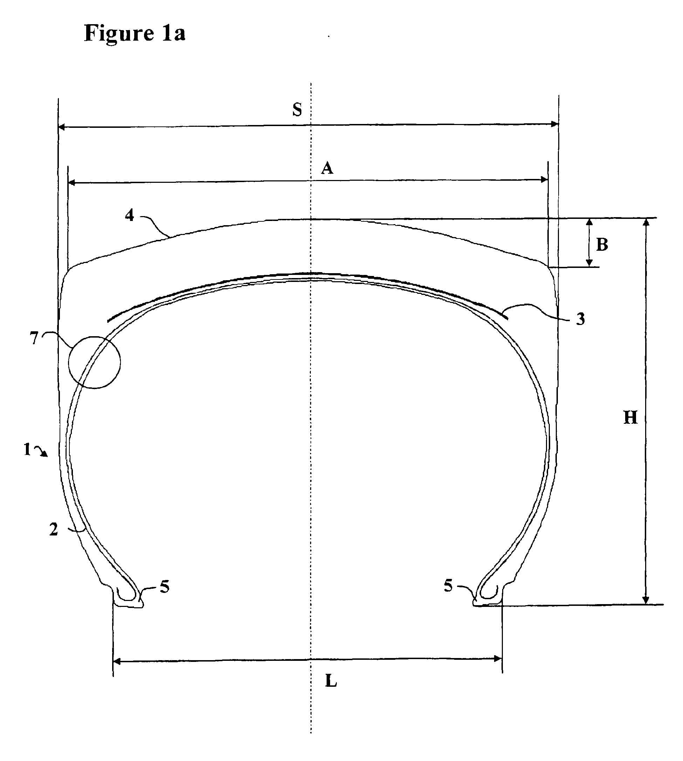

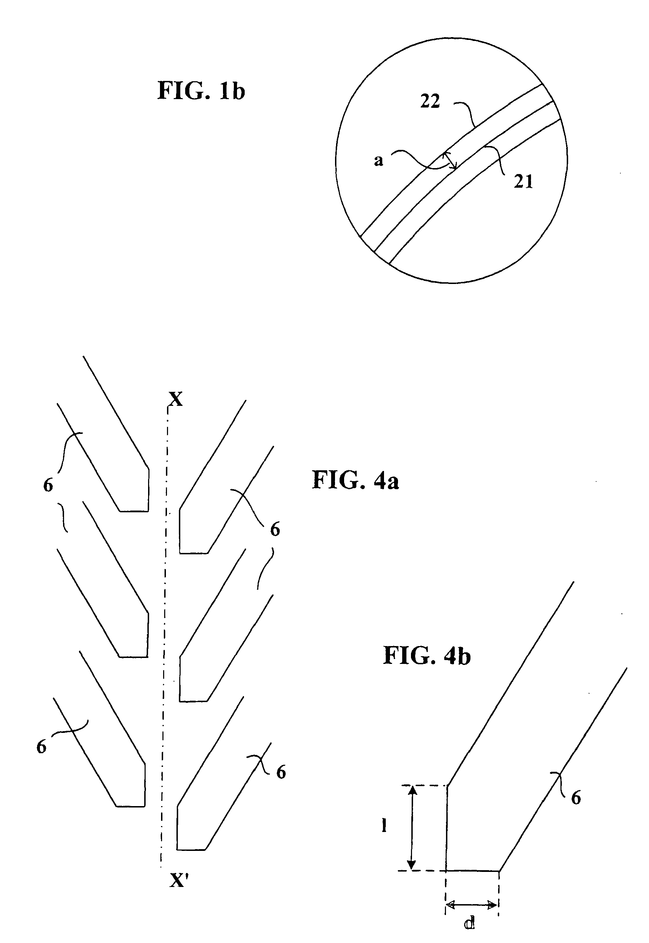

L'armature de carcasse 2 comprend deux nappes 21, 22, d'éléments de renforcement en polyester, orientés radialement. L'ancrage de l'armature de carcasse 2 dans les bourrelets 5 est représenté sur la figure 1 a du type à retournement autour d'une tringle, non représentée ; elle pourrait également être du type par association à des renforts circonférentiels, l'ensemble étant noyé dans des gommes de liaison.

L'armature de sommet 3 est constituée de plusieurs nappes de travail non représentées dans le détail sur les figures.

La bande de roulement 5 est formée de blocs, ou barrettes 6, non représentés sur la figure 1 a et figurant sur la figure 4.

Le rapport d'aspect H/S du pneumatique est 0,60, H étant la hauteur du pneumatique sur jante et S la largeur axiale maximale du pneumatique, lorsque ce dernier est monté sur sa jante de service et gonflé à sa pression recommandée.

Conformément à l'invention, le rapport de la largeur de la bande de roulement A sur la hauteur de flèche du sommet B est supérieur à 17 et égal à 17,9 dans le cas du pneumatique décrit.

Le rapport de la largeur de la bande de roulement A sur la largeur du pneumatique axiale maximale S est supérieur à 0,9. Dans le cas du pneumatique représenté, ce rapport A/S est égal à 0,92.

Le produit du rapport A/B, de la largeur de la bande de roulement A sur la hauteur de flèche B du sommet, par le rapport A/S, de la largeur de la bande de roulement A sur la largeur du pneumatique axiale maximale S, est supérieur à 16 et égal à 16,5 dans le cas du pneumatique décrit.

Ces différentes valeurs de ces produits ou rapports mettent en évidence que le pneumatique réalisé selon l'invention présente d'une part un sommet relativement plat par rapport à celui d'un pneumatique usuel pour des applications agraires et d'autre part une largeur de bande de roulement élargie par rapport à celle d'un pneumatique usuel pour des applications agraires.

Comme énoncé précédemment, ces caractéristiques du pneumatique réalisé selon l'invention permettent une utilisation de celui-ci en limitant encore les risques d'endommagement des cultures, notamment par compactage. En outre, le pneumatique selon l'invention autorise une utilisation à une pression inférieure à la pression habituellement nécessaire pour les pneumatiques à usage agricole pour des charges et dimensions usuelles. De plus, un tel pneumatique selon l'invention peut être utilisé sur sol dur avec une pression identique.

Le rapport de la largeur du pneumatique axiale maximale S sur la largeur de jante L est inférieur à 1,2 et dans le cas du pneumatique décrit égal à 1,13.

Cette valeur du rapport S/L indique un montage sur une jante plus large que celle habituellement utilisée pour des pneumatiques pour des applications agraires.

La bande de roulement du pneumatique est constituée d'un mélange caoutchouteux comportant 40 pce de caoutchouc naturel et présente des pertes hystérétiques PH égales à 30,5 ± 3.

L'utilisation de tels mélanges caoutchouteux permet d'éviter les échauffements notamment lors de roulage sur sol dur à des vitesses élevées.

La figure 1b illustre un agrandissement de la zone 7 et indique la distance « a » séparant les deux nappes carcasses 21, 22 notamment dans cette zone d'épaule. Cet écartement est égal à 2 mm et permet d'éviter un cisaillement des nappes carcasses lors du roulage des pneumatiques selon l'invention.

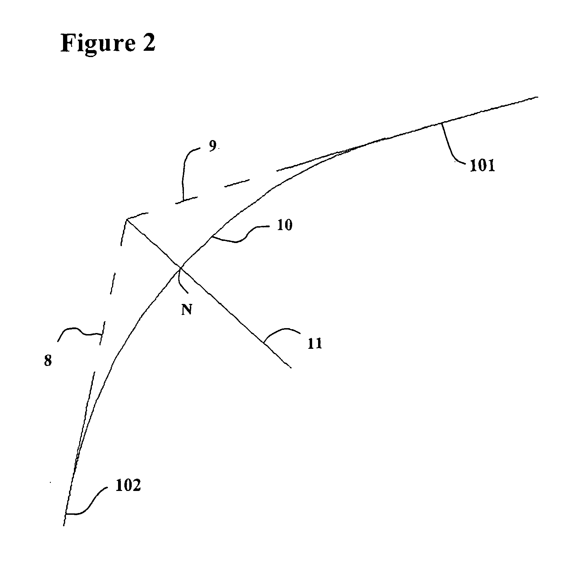

La figure 2 représente la zone d'une épaule d'un pneumatique selon l'invention et le tracé permettant la détermination de l'extrémité d'épaulement N. L'extrémité d'épaulement N est définie, dans la zone de l'épaule du pneumatique, par la projection orthogonale sur la surface extérieure 10 du pneumatique de l'intersection des tangentes 8, 9 aux surfaces d'une extrémité axialement extérieure de la bande de roulement 101 (sommet des barrettes) d'une part et de l'extrémité radialement extérieure d'un flanc 102 d'autre part.

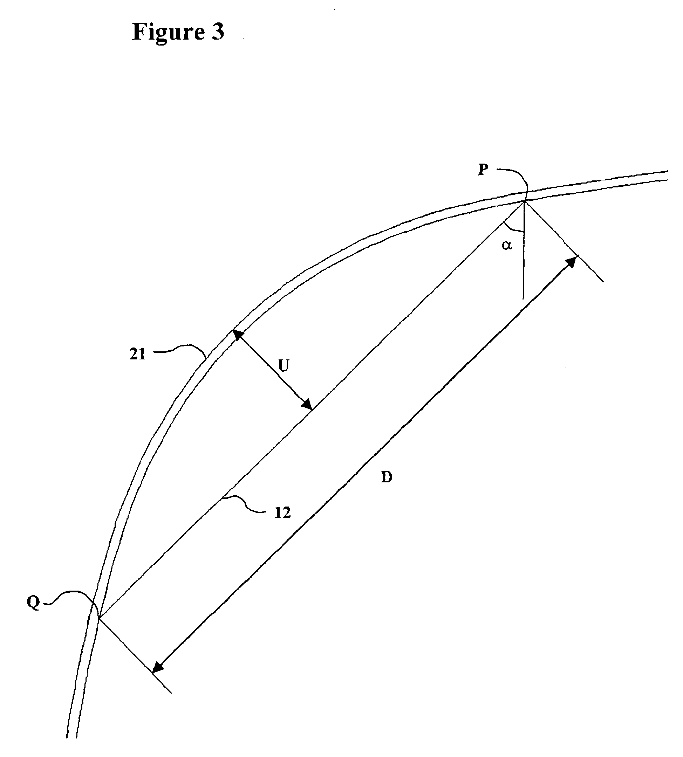

La figure 3 représente également la zone d'une épaule d'un pneumatique selon l'invention et le tracé permettant la détermination de la distance U mesurée selon la direction perpendiculaire à l'orientation de ladite corde entre la couche d'éléments de renforcement orientés radialement, radialement la plus à l'intérieur, et le centre de la corde 12. La corde 12 a une longueur D égale à 20% de la largeur du pneumatique axiale maximale S, et est tracée entre deux points P, Q de la paroi interne du pneumatique pour former un angle α de 45° avec la direction perpendiculaire à l'axe de rotation. La distance U est comprise entre 0,21xD et 0,33xD et dans le cas présent égale à 31 mm.

La figure 4a représente une partie de la surface d'un pneumatique 1 comportant des barrettes 6 de forme allongée et de direction moyenne inclinée par rapport à la direction circonférentielle, représentée par l'axe XX'. Ces barrettes 6 ne sont pas représentés entièrement sur la figure qui ne représente pas la totalité de la largeur de la bande de roulement du pneumatique. Ces barrettes répartis de part et d'autre de l'axe XX' se présente sous la forme d'un chevron ou plus exactement d'un V à branches décalées. Toutes les barrettes 6 ont une direction commune, direction telle que les extrémités axialement les plus proches du plan équatorial XX' rentrent, lors du roulage en marche avant du pneumatique, les premières dans l'aire de contact entre ledit pneumatique et le sol, alors que les extrémités des mêmes barrettes les plus proches des bords de la bande de roulement pénètrent les dernières dans l'aire de contact. La direction commune des barrettes est dite correspondre au sens de rotation du pneumatique.

La figure 4b représente de manière agrandie une partie d'une barrette 6 et notamment son extrémité la plus proche du plan équatorial XX'. Cette extrémité comporte une dimension axiale, c'est-à-dire parallèle à la direction de l'axe de roulement du pneumatique, et une dimension longitudinale c'est-à-dire parallèle à la direction longitudinale et donc parallèle à l'axe XX'. Conformément à l'invention le rapport de ces dimensions l/d est supérieur à 1 et dans le cas du pneumatique représenté égal à 1,76.

Les essais réalisés ont montré que de telles barrettes permettent de limiter l'usure de la bande de roulement notamment lors de roulage sur sol dur à des vitesses de l'ordre de 50 km/h.

## Revendications

1. Pneumatique (1) pour engin lourd de type agricole ou génie civil, monté sur une jante, comprenant une armature de carcasse radiale (2) surmontée radialement d'une armature de sommet (3), elle-même coiffée radialement d'une bande de roulement (4), ladite bande de roulement étant réunie à deux bourrelets par l'intermédiaire de deux flancs, le pneumatique ayant une hauteur H, une largeur axiale maximale S, une largeur de bande de roulement A et une hauteur de flèche méridienne B, mesurées sur le pneumatique monté sur sa jante de service de largeur L et gonflé à sa pression recommandée, le rapport de forme H/S de la hauteur H du pneumatique sur jante sur la largeur axiale maximale S du pneumatique étant inférieur à 0,75, **caractérisé en ce que** le rapport A/B de la largeur de la bande de roulement A sur la hauteur de flèche méridienne B du sommet est supérieur à 17 et inférieur à 37, et **en ce que** le rapport S/L de la largeur du pneumatique axiale maximale S sur la largeur de jante L est inférieur à 1,2.

2. Pneumatique (1) selon la revendication 1, **caractérisé en ce que** le rapport de forme H/S de la hauteur H du pneumatique sur jante sur la largeur axiale maximale S du pneumatique est inférieur à 0,60.

3. Pneumatique (1) selon l'une des revendications 1 ou 2, **caractérisé en ce que** le rapport A/S de la largeur de la bande de roulement A sur la largeur du pneumatique axiale maximale S est supérieur à 0,9.

4. Pneumatique (1) selon l'une des revendications précédentes, **caractérisé en ce que** le produit du rapport A/B, de la largeur de la bande de roulement A sur la hauteur de flèche B du sommet, par le rapport A/S, de la largeur de la bande de roulement A sur la largeur du pneumatique axiale maximale S, est supérieur à 14 et de préférence supérieur à 16.

5. Pneumatique (1) selon l'une des revendications précédentes, l'armature de carcasse radiale (2) comprenant au moins une couche d'éléments de renforcement orientés radialement, **caractérisé en ce que** la distance U entre la couche (21), radialement la plus à l'intérieur, d'éléments de renforcement orientés radialement et le centre de la corde (12), de longueur D égale à 20% de la largeur du pneumatique axiale maximale S, formant un angle de 45° avec la direction perpendiculaire à l'axe de rotation et placée entre deux points (P, Q) de la paroi interne du pneumatique, est comprise entre 0,21xD et 0,33xD, et **en ce que** la distance U est mesurée selon la direction perpendiculaire à l'orientation de ladite corde.

6. Pneumatique (1) selon l'une des revendications précédentes, l'armature de carcasse (2) comportant au moins deux nappes carcasses, **caractérisé en ce que** la distance (a) entre les renforts desdites nappes carcasse (21, 22) est supérieure à 1,5 mm et de préférence supérieure à 2 mm.

7. Pneumatique (1) selon l'une des revendications précédentes, **caractérisé en ce que** la bande de roulement (4) est constituée d'un mélange dont la composition de caoutchouc réticulée présentant des pertes hystérétiques réduites est à base d'au moins un élastomère diénique dont le taux molaire d'unités issues de diène(s) conjugué(s) est supérieur à 50 %.

8. Pneumatique (1) selon la revendication 7, **caractérisé en ce que** ledit élastomère diénique appartient au groupe constitué par le caoutchouc naturel, les polyisoprènes de synthèse, les polybutadiènes et les copolymères de butadiène et d'un vinylaromatique préparés en solution ou en émulsion.

9. Pneumatique (1) selon la revendication 7, **caractérisé en ce que** la composition de caoutchouc réticulé présentant des pertes hystérétiques réduites est à base d'au moins 20 pce et de préférence au moins 40 pce de caoutchouc naturel.

10. Pneumatique (1) selon l'une des revendications 7 à 9, **caractérisé en ce que** ladite composition comprend du noir de carbone à titre de charge renforçante majoritaire ou exclusive.

11. Pneumatique (1) selon l'une des revendications précédentes, **caractérisé en ce que** la sculpture de la bande de roulement (4) est composée principalement, de part et d'autre du plan équatorial (XX'), de barrettes (6) inclinées par rapport à la direction circonférentielle pour former un dessin en V et **en ce que** les extrémités des barrettes proches du plan équatorial présentent une surface destinée à venir au contact du sol dont le rapport l/d de la dimension longitudinale sur la dimension axiale est supérieur à 1.

## Patentansprüche

1. Luftreifen (1) für ein Landwirtschafts- oder Straßenbau-Schwerfahrzeug, der auf eine Felge montiert ist, eine radiale Karkassenbewehrung (2) enthält, die radial von einer Scheitelbewehrung (3) überlagert wird, die selbst radial von einem Laufstreifen (4) bedeckt wird, wobei der Laufstreifen über zwei Flanken mit zwei Wülsten vereint wird, wobei der Luftreifen eine Höhe H, eine maximale axiale Breite S, eine Laufstreifenbreite A und eine Meridian-Einfederungshöhe B hat, gemessen am auf seine Dienstfelge einer Breite L montierten und auf seinen empfohlenen Druck aufgepumpten Luftreifen, wobei das Formverhältnis H/S der Höhe H des Luftreifens auf Felge zur maximalen axialen Breite S des Luftreifens niedriger als 0,75 ist, **dadurch gekennzeichnet, dass** das Verhältnis A/B der Breite des Laufstreifens A zur Meridian-Einfederungshöhe B des Scheitels höher als 17 und niedriger als 37 ist, und dass das Verhältnis S/L der maximalen axialen Breite S des Luftreifens zur Felgenbreite L niedriger als 1,2 ist.

2. Luftreifen (1) nach Anspruch 1, **dadurch gekennzeichnet, dass** das Formverhältnis H/S der Höhe H des Luftreifens auf Felge zur maximalen axialen Breite S des Luftreifens niedriger als 0,60 ist.

3. Luftreifen (1) nach einem der Ansprüche 1 oder 2, **dadurch gekennzeichnet, dass** das Verhältnis A/S der Breite des Laufstreifens A zur maximalen axialen Breite S des Luftreifens höher als 0,9 ist.

4. Luftreifen (1) nach einem der vorhergehenden Ansprüche, **dadurch gekennzeichnet, dass** das Produkt aus dem Verhältnis A/B der Breite des Laufstreifens A zur Einfederungshöhe B des Scheitels und dem Verhältnis A/S der Breite des Laufstreifens A zur maximalen axialen Breite S des Luftreifens höher als 14 und vorzugsweise als 16 ist.

5. Luftreifen (1) nach einem der vorhergehenden Ansprüche, wobei die radiale Karkassenbewehrung (2) mindestens eine Schicht von radial ausgerichteten Verstärkungselementen enthält, **dadurch gekennzeichnet, dass** der Abstand U zwischen der radial am weitesten innen liegenden Schicht (21) von radial ausgerichteten Verstärkungselementen und der Mitte der Sehne (12) einer Länge D gleich 20% der maximalen axialen Breite S des Luftreifens, die einen Winkel von 45° mit der Richtung lotrecht zur Drehachse bildet und zwischen zwei Punkten (P, Q) der Innenwand des Luftreifens angeordnet ist, zwischen 0,21xD und 0,33xD liegt, und dass der Abstand U gemäß der Richtung lotrecht zur Ausrichtung der Sehne gemessen wird.

6. Luftreifen (1) nach einem der vorhergehenden Ansprüche, wobei die Karkassenbewehrung (2) mindestens zwei Karkassenlagen aufweist, **dadurch gekennzeichnet, dass** der Abstand (a) zwischen den Verstärkungen der Karkassenlagen (21, 22) größer ist als 1,5 mm und vorzugsweise größer als 2 mm.

7. Luftreifen (1) nach einem der vorhergehenden Ansprüche, **dadurch gekennzeichnet, dass** der Laufstreifen (4) aus einer Mischung besteht, deren Zusammensetzung aus vernetztem Kautschuk mit reduzierten Hystereseverluste aus mindestens einem Dienelastomer besteht, dessen Molrate von aus konjugiertem/konjugierten Dien(en) stammendem Einheiten höher als 50 % ist.

8. Luftreifen (1) nach Anspruch 7, **dadurch gekennzeichnet, dass** das Dienelastomer zu der Gruppe gehört, die aus dem natürlichen Kautschuk, den Synthese-Polyisoprenen, den Polybutadienen und den Copolymeren aus Butadien und einer vinylaromatischen Verbindung besteht, die in Lösung oder Emulsion hergestellt werden.

9. Luftreifen (1) nach Anspruch 7, **dadurch gekennzeichnet, dass** die Zusammensetzung aus vernetztem Kautschuk mit reduzierten Hystereseverlusten aus mindestens 20 phr und vorzugsweise mindestens 40 phr natürlichem Kautschuk besteht.

10. Luftreifen (1) nach einem der Ansprüche 7 bis 9, **dadurch gekennzeichnet, dass** die Zusammensetzung Russ als mehrheitliche oder exklusive verstärkende Ladung enthält.

11. Luftreifen (1) nach einem der vorhergehenden Ansprüche, **dadurch gekennzeichnet, dass** das Profil des Laufstreifens (4) hauptsächlich zu beiden Seiten der Äquatorialebene (XX') aus Stollen (6) besteht, die bezüglich der Umfangsrichtung geneigt sind, um ein V-förmiges Muster zu bilden, und dass die Enden der Stollen nahe der Äquatorialebene eine Fläche aufweisen, die dazu bestimmt ist, mit dem Boden in Kontakt zu kommen, deren Verhältnis l/d der Längsabmessung zur axialen Abmessung größer als 1 ist.

## Claims

1. Tyre (1) for a heavy vehicle of the agricultural or construction type, mounted on a rim, comprising a radial carcass reinforcement (2) surmounted radially by a crown reinforcement (3), itself covered radially by a tread (4), the said tread being joined to two beams by means of two sidewalls, the tyre having a height H, a maximum axial width S, a tread width A and a meridian curve height B, all measured on the tyre mounted on its service rim of width L and inflated to its recommended pressure, the ratio of shape H/S of the height H of the tyre on the rim over the maximum axial width S of the tyre being less than 0.75, **characterized in that** the ratio A/B of the width of the tread A over the meridian curve height B of the crown is greater than 17 and less than 37, and **in that** the ratio S/L of the maximum axial width S of the tyre over the rim width L is less than 1.2.

2. Tyre (1) according to Claim 1, **characterized in that** the ratio of shape H/S of the height H of the tyre on the rim over the maximum axial width S of the tyre is less than 0.60.

3. Tyre (1) according to one of Claims 1 and 2, **characterized in that** the ratio A/S of the width of the tread A over the maximum axial width S of the tyre is greater than 0.9.

4. Tyre (1) according to one of the preceding claims, **characterized in that** the product of the ratio A/B, of the width of the tread A over the curve height B of the crown by the ratio A/S, of the width of the tread A over the maximum axial width S of the tyre, is greater than 14 and preferably greater than 16.

5. Tyre (1) according to one of the preceding claims, the radial carcass reinforcement (2) comprising at least one layer of radially oriented reinforcement elements, **characterized in that** the distance U between the radially innermost layer (21) of radially orientated reinforcement elements and the centre of the chord (12), of length D equal to 20% of the maximum axial width S of the tyre, forming an angle of 45° with the direction perpendicular to the rotation axis and placed between two points (P, Q) of the inner wall of the tyre, is between 0.21xD and 0.33xD, and **in that** the distance U is measured in the direction perpendicular to the orientation of the said chord.

6. Tyre (1) according to one of the preceding claims, the carcass reinforcement (2) comprising at least two carcass plies, **characterized in that** the distance (a) between the reinforcers of the said carcass plies (21, 22) is greater than 1.5 mm and preferably greater than 2 mm.

7. Tyre (1) according to one of the preceding claims, **characterized in that** the tread (4) consists of a compound of which the crosslinked rubber composition having reduced hysteretic losses is based on at least one diene elastomer of which the molar ratio of units originating from conjugated diene(s) is greater than 50%.

8. Tyre (1) according to Claim 7, **characterized in that** the said diene elastomer belongs to the group consisting of natural rubber, synthetic polyisoprenes, polybutadienes and butadiene copolymers and of a vinyl aromatic compound prepared in solution or in emulsion.

9. Tyre (1) according to Claim 7, **characterized in that** the composition of crosslinked rubber having reduced hysteretic losses is based on at least 20 phr and preferably at least 40 phr of natural rubber.

10. Tyre (1) according to one of Claims 7 to 9, **characterized in that** the said composition comprises carbon black as a majority or exclusive reinforcing filler.

11. Tyre (1) according to one of the preceding claims, **characterized in that** the design of the tread (4) consists mainly, on either side of the equatorial plane (XX'), of lugs (6) inclined relative to the circumferential direction in order to form a V design and **in that** the ends of the lugs close to the equatorial plane have a surface designed to come into contact with the ground of which the ratio l/d of the longitudinal dimension over the axial dimension is greater than 1.
